# FASCICULE DE BREVET EUROPEEN

(11) **EP 4 436 876 B1**
(45) Date de publication et mention de la délivrance du brevet: **14.01.2026**
(21) Numéro de dépôt: 22826370.3
(22) Date de dépôt: 18.11.2022
(51) Int. Cl.: B64D 41/00

(54) **FOURNITURE D'ÉNERGIE DANS UN AÉRONEF UTILISANT UN CONTRÔLE DE STATISME**
ENERGIEVERSORGUNG IN EINEM FLUGZEUG UNTER VERWENDUNG VON DROOP KONTROLLE
SUPPLY OF ENERGY IN AN AIRCRAFT USING DROOP CONTROL

(30) Priorité: 25.11.2021 FR 2112556
(43) Date de publication de la demande: 02.10.2024
(73) Titulaire: SAFRAN, 75015 Paris (FR)
(72) Inventeur: DOS SANTOS, Victor, 77550 MOISSY-CRAMAYEL (FR); ROUGIER, Florent, 77550 MOISSY-CRAMAYEL (FR); FLORENT, Isabelle, 31200 TOULOUSE (FR)
(74) Mandataire: Gevers & Orès
(86) Numéro de dépôt international: PCT/FR2022/052127
(87) Numéro de publication internationale: WO 2023/094751

(56) Documents cités:
- GB-A- 2 510 121
- US-A1- 2020 083 709

## Description

### Domaine technique de l'invention

La présente invention concerne une installation de fourniture d'énergie dans un aéronef, un aéronef comportant une telle installation, ainsi qu'un procédé correspondant.

### Arrière-plan technologique

Il est connu de l'état de la technique de prévoir, dans un aéronef, une installation de fourniture d'énergie du type comportant :
- un bus continu auquel au moins une charge électrique est destinée à être connectée ;
- plusieurs sources électriques incluant :
   - au moins une source électrique dite basse pression conçue pour prélever de la puissance d'un corps basse pression d'une turbomachine de l'aéronef, afin de fournir un courant au bus continu, et
   - au moins une source électrique dite haute pression conçue pour prélever de la puissance d'un corps haute pression de la turbomachine de l'aéronef, afin de fournir un courant au bus continu.

Il peut être souhaité de prévoir une régulation des sources électriques qui soit robuste et qui ne gêne sensiblement pas le fonctionnement de la turbomachine.

Par exemple, le document GB 2510121 A1 décrit une régulation de statisme de fréquence ou de tension avec un système maître/esclave.

### Résumé de l'invention

Il est donc proposé une installation de fourniture d'énergie dans un aéronef, du type précité, caractérisée en ce qu'elle comporte en outre :
- un système de calcul d'un gain de statisme pour chaque source électrique basse pression et chaque source électrique haute pression, à partir d'au moins une caractéristique de fonctionnement de la turbomachine ; et
- pour chaque source électrique basse pression et chaque source électrique haute pression, un module de commande de la source électrique considérée, conçu pour mettre en œuvre une régulation par statisme à partir du gain de statisme calculé pour la source électrique considérée.

Grâce à l'invention, il est possible de mettre en œuvre une régulation décentralisée, c'est-à-dire indépendante d'une source électrique à l'autre. Ainsi, la régulation est robuste à la perte d'une des sources. En outre, le fait que les gains de statisme sont calculés à partir d'au moins une caractéristique de fonctionnement de la turbomachine permet de les définir en accord avec le point de fonctionnement souhaité, de sorte que la régulation ne gêne sensiblement pas le fonctionnement de la turbomachine.

Une installation de fourniture d'énergie selon l'invention peut en outre comporter une ou plusieurs des caractéristiques optionnelles suivantes, dans n'importe quelle combinaison techniquement possible.

De façon optionnelle, la au moins une caractéristique de fonctionnement de la turbomachine comporte au moins un parmi : un débit d'entrée de carburant et/ou un débit d'entrée d'air dans une chambre de combustion de la turbomachine, une vitesse de rotation du corps basse pression, une vitesse de rotation du corps haute pression, une température d'entrée d'air et/ou d'entrée de carburant et/ou de gaz d'échappement sortant de la chambre de combustion.

De façon optionnelle également, le système de calcul des gains de statisme comporte : - un contrôleur de la turbomachine conçu pour définir un ratio entre le prélèvement de puissance du corps haute pression par la ou les sources électriques haute pression et le prélèvement de puissance du corps basse pression par la ou les sources électriques basse pression, à partir de la ou des caractéristiques de fonctionnement de la turbomachine ; et - pour chaque source électrique, un module de calcul, à partir du ratio, du gain de statisme de la source électrique considérée, afin que le ratio soit respecté.

De façon optionnelle également, le contrôleur est conçu pour fournir des données dite de puissance représentatives d'une puissance mécanique maximale basse pression pouvant être prélevée sur le corps basse pression et d'une puissance mécanique maximale haute pression pouvant être prélevée sur le corps haute pression, et chaque module de calcul est conçu pour calculer le gain de statisme associé à partir des données de puissance, afin que la puissance mécanique prélevée du corps basse pression reste inférieure ou égale à la puissance mécanique maximale basse pression et que la puissance mécanique prélevée du corps haute pression reste inférieure ou égale à la puissance mécanique maximale haute pression.

De façon optionnelle également, chaque module de calcul est conçu pour calculer le gain de statisme associé de manière à maximiser une somme des courants pouvant être respectivement fournis par les sources électriques, lorsque le bus continu présente une tension de bus minimale prédéfinie par la régulation de statisme.

De façon optionnelle également, l'installation comporte plusieurs sources électriques haute pression et/ou plusieurs sources électriques basse pression, et le module de calcul de chaque source électrique haute pression, respectivement basse pression, est conçu pour calculer le gain de statisme associé à partir d'un ratio entre, d'une part, le courant fourni par la source haute pression, respectivement basse pression, considérée et, d'autre part, une somme des courants respectivement fournis par toutes les sources électriques haute pression, respectivement basse pression.

De façon optionnelle également, chaque module de calcul est conçu pour calculer le gain de statisme de la source électrique haute pression comme le produit du ratio par une constante et le gain de statisme de la source électrique basse pression comme le produit du complémentaire à un du ratio par la constante.

De façon optionnelle également, chaque module de commande est conçu pour : - calculer un courant de référence à partir du gain de statisme associé ; - calculer, à partir des données de puissance, un courant maximal pouvant être fourni par la source électrique associée ; et - limiter le courant de référence au courant maximal.

Il est également proposé un aéronef comportant une installation selon l'invention.

Il est également proposé un procédé de fourniture d'énergie dans un aéronef, caractérisé en ce qu'il comporte : - le calcul, à partir d'au moins une mesure d'au moins une caractéristique de fonctionnement d'une turbomachine, d'un gain de statisme pour : chaque source électrique dite basse pression conçue pour prélever de la puissance d'un corps basse pression de la turbomachine de l'aéronef, afin de fournir un courant à un bus continu auquel au moins une charge électrique est destinée à être connectée, et chaque source électrique dite haute pression conçue pour prélever de la puissance d'un corps haute pression de la turbomachine de l'aéronef, afin de fournir un courant au bus continu ; et - pour chaque source électrique basse pression et chaque source électrique haute pression, la mise en œuvre d'une régulation de statisme à partir du gain de statisme calculé pour la source électrique considérée.

### Brève description des figures

L'invention sera mieux comprise à l'aide de la description qui va suivre, donnée uniquement à titre d'exemple et faite en se référant aux dessins annexés dans lesquels :
- la figure 1 est une vue simplifiée d'une installation selon l'invention de fourniture d'énergie dans un aéronef,
- la figure 2 est une vue fonctionnelle de modules de commande de deux sources électriques respectivement couplées à un corps basse pression et un corps haute pression d'une turbomachine, pour fournir des courants à un bus continu, les modules de commande mettant en œuvre une régulation par statisme,
- la figure 3 est une vue fonctionnelle d'un module de calcul d'un gain de statisme pour le module de commande de la source électrique couplée au corps basse pression,
- la figure 4 est une vue fonctionnelle d'un module de calcul d'un gain de statisme pour le module de commande de la source électrique couplée au corps haute pression,
- la figure 5 est une courbe illustrant la relation entre les gains de statisme pour respecter une répartition souhaitée entre le prélèvement de puissance mécanique sur le corps basse pression et le prélèvement de puissance mécanique sur le corps haute pression, dans un premier cas de fonctionnement,
- la figure 6 illustre les courants fournis par les sources électriques en fonction d'une tension du bus continu, dans le premier cas de fonctionnement,
- la figure 7 est une courbe illustrant la relation entre les gains de statisme pour respecter une répartition souhaitée entre le prélèvement de puissance mécanique sur le corps basse pression et le prélèvement de puissance mécanique sur le corps haute pression, dans un deuxième cas de fonctionnement,
- la figure 8 illustre les courants fournis par les sources électriques en fonction de la tension du bus continu, dans le deuxième cas de fonctionnement,
- la figure 9 est une vue simplifiée d'une autre installation selon l'invention de fourniture d'énergie dans un aéronef, avec plusieurs sources électriques couplées au corps haute pression,
- la figure 10 est une vue fonctionnelle d'un module de calcul d'un gain de statisme pour le module de commande d'une des sources électriques couplées au corps haute pression,
- la figure 11 est une vue fonctionnelle d'un module de calcul d'un gain de statisme pour le module de commande de l'autre des sources électriques couplées au corps haute pression,
- la figure 12 est une vue fonctionnelle d'une alternative des modules de commande,
- la figure 13 est une vue fonctionnelle d'une alternative de module de calcul d'un gain de statisme pour le module de commande de la source électrique couplée au corps basse pression,
- la figure 14 est une vue fonctionnelle d'une alternative de module de calcul d'un gain de statisme pour le module de commande de la source électrique couplée au corps haute pression, et
- la figure 15 illustre les courants fournis par les sources électriques en fonction de la tension du bus continu, dans l'alternative des figures 12 à 14.

### Description détaillée de l'invention

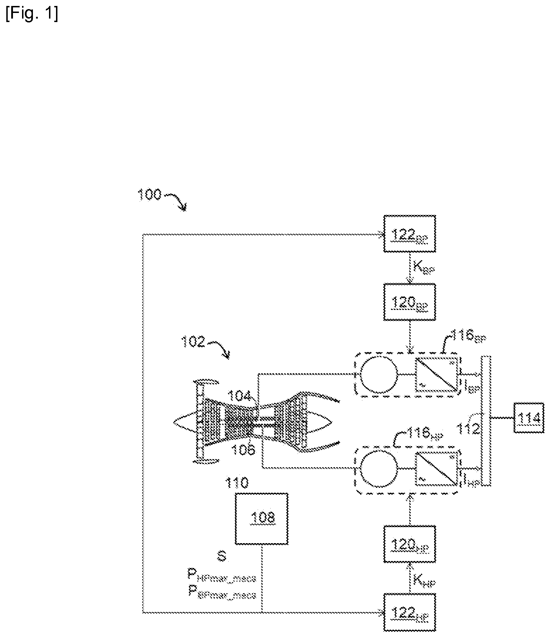

En référence à la figure 1, un exemple d'une installation 100 de fourniture d'énergie dans un aéronef, va à présent être décrite.

L'installation 100 comporte tout d'abord une turbomachine 102 comprenant un corps basse pression (BP) 104 et un corps haute pression (HP) 106. La turbomachine 102 est par exemple une turbomachine propulsive de l'aéronef.

L'installation 100 comporte en outre un contrôleur 108 de la turbomachine 102. Ce contrôleur 108 est par exemple notamment conçu pour régler un débit d'entrée de carburant et/ou un débit d'entrée d'air dans une chambre de combustion de la turbomachine 102. Pour régler le débit d'entrée d'air, le contrôleur 108 contrôle par exemple l'orientation de pales statoriques d'un compresseur haute pression (HP) 110 du corps HP 106. Le contrôleur 108 est par exemple conçu pour réaliser ces réglages à partir d'au moins une caractéristique (mesurée et/ou estimée, par exemple à partir d'autres mesures) de fonctionnement de la turbomachine 102, par exemple une ou plusieurs parmi : le débit d'entrée de carburant et/ou le débit d'entrée d'air, une vitesse de rotation du corps BP 104, une vitesse de rotation du corps HP 106, une température d'entrée d'air et/ou d'entrée de carburant et/ou de gaz d'échappement sortant de la chambre de combustion.

Le contrôleur 108 est en outre conçu pour définir un ratio S de prélèvement de puissance entre le corps BP et le corps HP. Ce ratio S est généralement appelé « split » en anglais et exprime la proportion de puissance mécanique prélevée sur le corps HP 106 (ou bien, alternativement, sur le corps BP 104) par rapport à la puissance mécanique prélevée sur les deux corps BP 104 et HP 106. Le split S est par exemple exprimé en pourcentage. La définition du ratio S est réalisée à partir d'au moins une caractéristique (mesurée et/ou estimée, par exemple à partir d'autres mesures) de fonctionnement de la turbomachine 102, par exemple une ou plusieurs parmi : le débit d'entrée de carburant et/ou le débit d'entrée d'air, une vitesse de rotation du corps BP 104, une vitesse de rotation du corps HP 106, une température d'entrée d'air et/ou d'entrée de carburant et/ou de gaz d'échappement sortant de la chambre de combustion. Le contrôleur 108 est par exemple conçu pour définir le split S à partir d'une table de correspondance (de l'anglais « look-up table ») associant des valeurs de la ou les caractéristiques de fonctionnement de la turbomachine 102 avec des valeurs du split S.

De préférence, le contrôleur 108 est en outre conçu pour calculer des données dites de puissance représentatives d'une puissance mécanique maximale pouvant être prélevée sur le corps BP, notée P_{BPmax_meca}, et d'une puissance mécanique maximale pouvant être prélevée sur le corps HP, notée P_{HPmax_meca}. Ces données de puissance peuvent comporter par exemple les puissances maximales P_{BPmax_meca}, P_{HPmax_meca} elles-mêmes ou bien des couples maximaux C_{BPmax}, C_{HPmax} respectivement fournis par le corps BP 104 et le corps HP 106. Les données de puissance sont par exemple calculées à partir d'au moins une caractéristique (mesurée et/ou estimée, par exemple à partir d'autres mesures) de fonctionnement de la turbomachine 102, par exemple une ou plusieurs parmi : un couple d'un arbre de sortie de la turbomachine 102, la vitesse de rotation du corps BP 104, la vitesse de rotation du corps HP, la température d'entrée d'air et/ou d'entrée de carburant et/ou de gaz d'échappement sortant de la chambre de combustion, le débit d'entrée d'air et/ou d'entrée de carburant, la pression d'entrée d'air et/ou d'entrée de carburant, un couple fourni par le corps BP 104 et un couple fourni par le corps HP 106.

L'installation 100 comporte en outre un bus continu 112 (de l'anglais « Direct Current ») auquel au moins une charge électrique 114 est destinée à être connectée. Chaque charge 114 correspond par exemple à un ou plusieurs équipements de l'aéronefs.

L'installation 100 comporte en outre plusieurs sources électriques 116_{BP}, 116_{HP}, chacune conçue pour prélever de la puissance mécanique de la turbomachine 102, afin de fournir de la puissance électrique au bus continu 112.

Ces sources électriques 116_{BP}, 116_{HP} incluent en particulier une ou plusieurs sources électriques, qualifiées de basse pression (BP), chacune conçue pour prélever de la puissance mécanique du corps BP 104 de la turbomachine 102, afin de fournir de la puissance électrique au bus continu 112. Sur la figure 1, l'installation 100 comporte une seule source électrique BP, désignée par la référence 116_{BP}.

Les sources électriques 116_{BP}, 116_{HP} incluent en outre une ou plusieurs sources électriques, qualifiées de haute pression (HP), chacune conçue pour prélever de la puissance mécanique du corps HP 106 de la turbomachine 102, afin de fournir de la puissance électrique au bus continu 112. Sur la figure 1, l'installation 100 comporte une seule source électrique HP, désignée par la référence 116_{HP}.

Par exemple, chaque source électrique 116_{BP}, 116_{HP} comporte une génératrice suivie d'un redresseur.

L'installation 100 comporte en outre, pour chaque source électrique 116_{BP}, 116_{HP}, un module de commande 120_{BP}, 120_{HP} de la source électrique 116_{BP}, 116_{HP} considérée, en particulier de son redresseur. Chaque module de commande 120_{BP}, 120_{HP} est conçu pour mettre en œuvre une régulation de statisme (de l'anglais « Droop Control ») à partir d'un gain de statisme K_{BP}, K_{HP} associé à la source électrique 116₁, 116₂ considérée.

L'installation 100 comporte en outre, pour chaque source électrique 116_{BP}, 116_{HP}, un module 122_{BP}, 122_{HP} de calcul, à partir du ratio S, du gain de statisme K_{BP}, K_{HP} pour la source électrique 116_{BP}, 116_{HP} considérée, afin que le ratio S soit respecté.

De manière générale, la régulation de statisme consiste à laisser le bus continu 112 présenter une tension de bus U_{DC} pouvant légèrement varier, entre une tension nominale U_{DC}* et une tension minimale U_{DCmin} inférieure à la tension nominale U_{DC}*, d'où le terme d' « affaissement ». En outre, dans la régulation de statisme, chaque source électrique 116_{BP}, 116_{HP} est régulée pour fournir un courant I_{BP}, I_{HP} proportionnel à la chute de tension de bus ΔU_{DC} (égal à U_{DC}* - U_{DC}), le gain de statisme K_{BP}, K_{HP} associé constituant le rapport de proportionnalité : I_{BP} = K_{BP} · ΔU_{DC} et I_{HP} = K_{HP} · ΔU_{DC}

De cette manière, les régulations des sources électriques 116_{BP}, 116_{HP} peuvent être réalisées indépendamment les unes des autres, mais restent néanmoins couplées par la tension de bus U_{DC} de manière à atteindre ensemble un point d'équilibre dans lequel la contribution de puissance électrique fournie au bus continu 112 par chaque source électrique 116_{BP}, 116_{HP} est définie par les gains de statisme K_{BP}, K_{HP}. En réglant ces derniers, il est donc possible de régler les contributions relatives des sources électriques 116_{BP}, 116_{HP}.

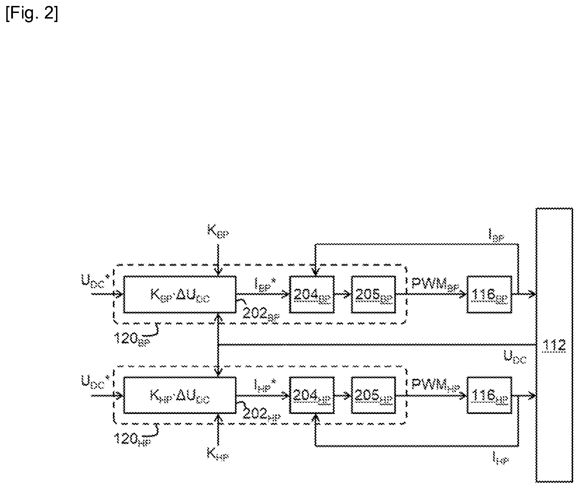

Par exemple, le courant fourni I_{BP}, I_{HP} est régulé pour suivre un courant de référence I_{BP}*, I_{HP}* donné par I_{BP}* = K_{BP} · ΔU_{DC} et I_{HP}* = K_{HP} · ΔU_{DC}. C'est cet exemple d'implémentation qui va à présent être décrit en référence à la figure 2.

Dans cet exemple, chaque module de commande 120_{BP}, 120_{HP} comporte un bloc 202_{BP}, 202_{HP} de calcul du courant de référence I_{BP}*, I_{HP}* à partir de la tension de bus U_{DC}, de la tension de bus nominale U_{DC}* et du gain de statisme K_{BP}, K_{HP}.

Chaque module de commande 122_{BP}, 122_{HP} comporte en outre un bloc 204_{BP}, 204_{HP} de comparaison du courant fourni I_{BP}, I_{HP} au courant de référence I_{BP}*, I_{HP}* pour fournir une erreur de courant. Chaque module de commande 122_{BP}, 122_{HP} comporte en outre un bloc de régulation conçu pour fournir des commandes à la source électrique 116_{BP}, 116_{HP} à partir de l'erreur de courant. Ces commandes tendent à rendre le courant fourni I_{BP}, I_{HP} égal au courant de référence I_{BP}*, I_{HP}*, autrement dit, tendent à annuler l'erreur de courant. Les commandes sont par exemple des commandes à modulation de largeur d'impulsions PWM_{BP}, PWM_{HP}.

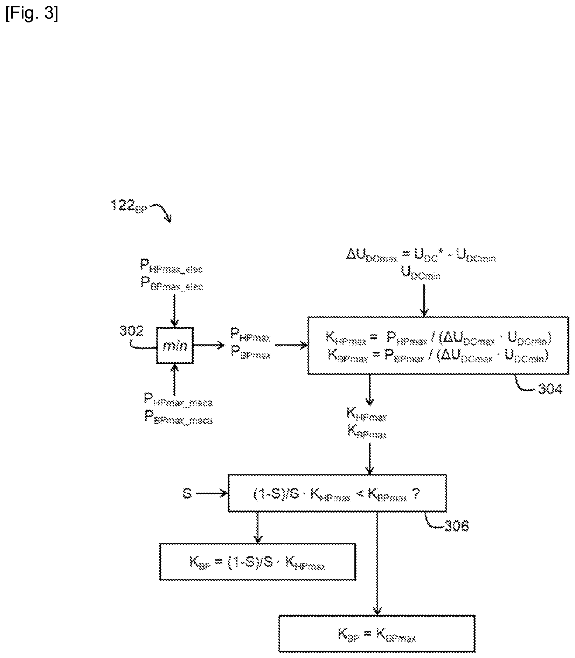

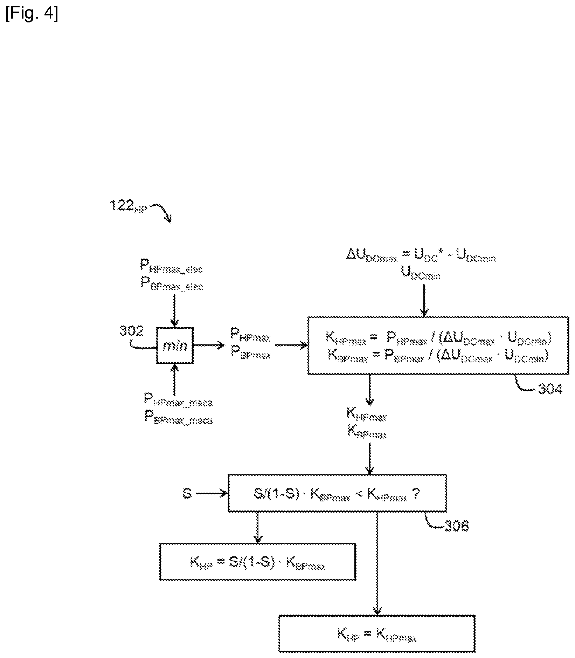

En référence à la figure 3 et à la figure 4, un exemple d'implémentation des modules 122_{BP}, 122_{HP} de calcul des gains de statisme K_{BP}, K_{HP}, va à présent être décrit.

Chaque module 122_{BP}, 122_{HP} comporte par exemple un bloc 302 de calcul d'une puissance électrique maximale P_{BPmax}, P_{HPmax} pouvant être fournie par la source électrique 116_{BP}, 116_{HP} associée. De préférence, cette puissance électrique maximale P_{BPmax}, P_{HPmax} tient compte de la puissance mécanique maximale P_{BPmax_meca}, P_{HPmax_meca} pouvant être prélevée, qui est, par exemple, fournie par le contrôleur 108 ou bien calculée à partir du couple maximal fourni par le contrôleur 108 et de la vitesse de rotation du corps BP 104, respectivement du corps HP106, et/ou d'une puissance nominale P_{BPmax_elec}, P_{HPmax_elec} de la source électrique 116_{BP}, 116_{HP} considérée. Par exemple, la puissance électrique maximale P_{BPmax}, P_{HPmax} est le minimum entre la puissance mécanique maximale P_{BPmax_meca}, P_{HPmax_meca} pouvant être prélevée et la puissance nominale P_{BPmax_elec}, P_{HPmax_elec} de la source électrique 116_{BP}, 116_{HP} considérée.

Généralement, les puissances nominales P_{BPmax_elec}, P_{HPmax_elec} des sources électriques 116_{BP}, 116_{HP} dépendent de leur conception et sont fixes. En revanche, les puissances mécaniques maximales P_{BPmax_meca}, P_{HPmax_meca} pouvant être prélevées dépendent généralement du point de fonctionnement et de l'état de la turbomachine 102 et évoluent donc au cours du temps. Ainsi, les puissances électriques maximales P_{BPmax}, P_{HPmax} peuvent évoluer au cours du temps.

Chaque module 122_{BP}, 122_{HP} comporte en outre un bloc 304 de calcul d'un gain de statisme maximal K_{BPmax}, K_{HPmax}, permettant à la source électrique 116_{BP}, 116_{HP} associée de fournir la puissance maximale P_{BPmax}, P_{HPmax}, en particulier lorsque la tension de bus U_{DC} est la tension de bus minimale U_{DCmin}.

De manière générale, un même ratio S peut être obtenu par plusieurs gains de statisme K_{BP}, K_{HP}. De préférence, les modules 122_{BP}, 122_{HP} de calcul des gains de statisme K_{BP}, K_{HP} sont conçus pour calculer ces derniers pour maximiser la somme des courants I_{BP}, I_{HP} pouvant être fournis par les sources électriques 116_{BP}, 116_{HP}.

Le courant maximal I_{BPmax}, I_{HPmax} pouvant être fourni par chaque source électrique 116_{BP}, 116_{HP} est celui fourni lorsque la tension de bus U_{DC} est égale à la tension de bus minimale U_{DCmin}, c'est-à-dire pour une chute de tension maximale ΔU_{DCmax} = U_{DC}* - U_{DCmin}. Les courants maximaux I_{BPmax}, I_{HPmax} pouvant être fournis sont alors donnés par : I_{BPmax} = K_{BP} · ΔU_{DCmax} et I_{HPmax} = K_{HP} · ΔU_{DCmax}. Ainsi, en tenant compte des puissances maximales P_{BPmax}, P_{HPmax} calculées, les gains de statisme maximaux K_{BPmax}, K_{BPmax} sont donnés par : K_{BPmax} = P_{BPmax} / (ΔU_{DCmax} · U_{DCmin}) et K_{HPmax} = P_{HPmax} / (ΔU_{DCmax} · U_{DCmin}).

Par ailleurs, le ratio S est donnée par S = K_{HP}/(K_{HP} + K_{BP}). Ainsi, pour un ratio S donné, les gains de statisme sont reliés l'un à l'autre par K_{BP} = (1-S)/S · K_{HP}.

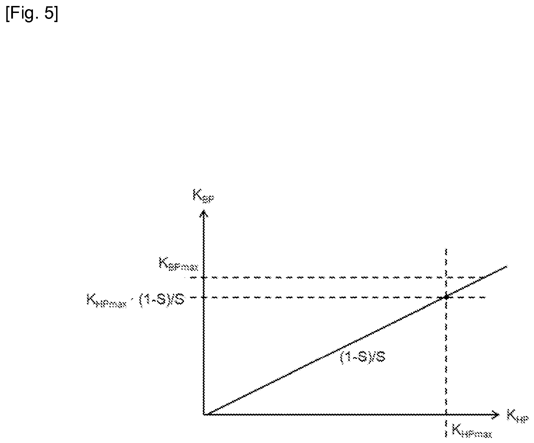

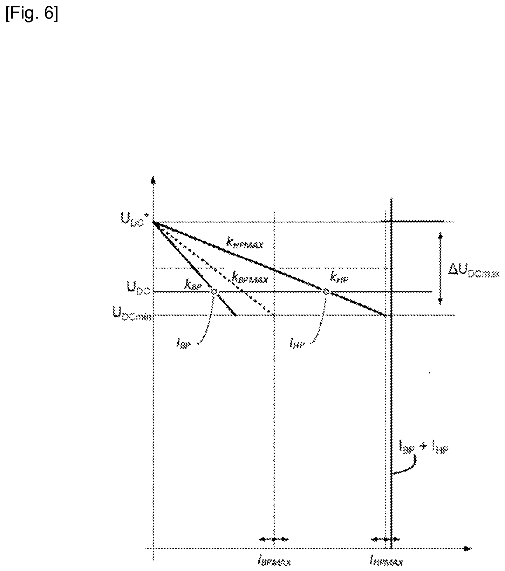

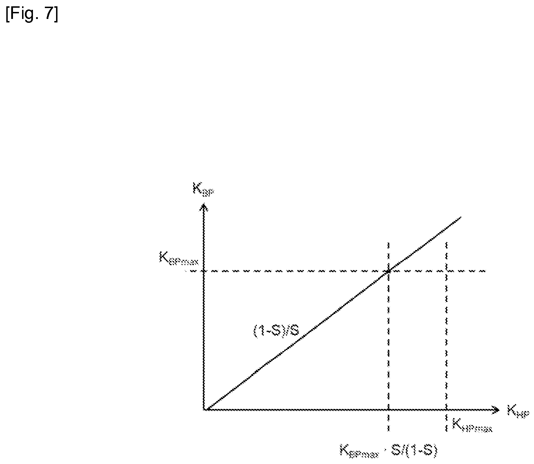

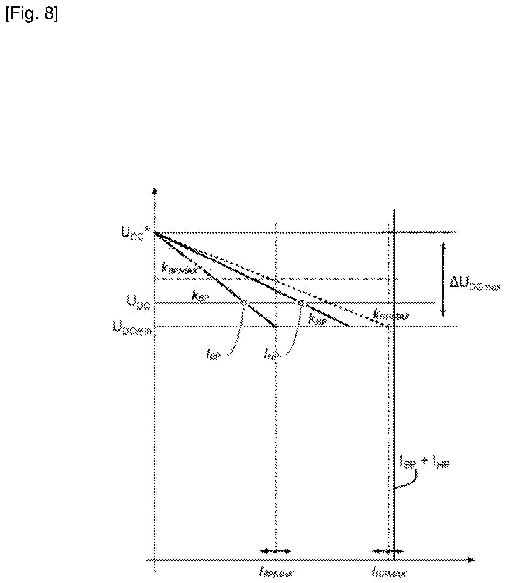

En référence aux figures 5 à 7, il est aisé de voir que la somme des courants fournis I_{BP}, I_{HP} est maximale lorsque l'un des gains de statisme H_{BP}, K_{HP} est à son maximum. Pour respecter les puissances maximales P_{BPmax}, P_{HPmax}, il convient en outre de s'assurer que l'autre des gains de statisme K_{BP}, K_{HP} est bien en-dessous (ou égal) à son maximum. Sur l'exemple des figures 5 et 6, c'est le gain de statisme K_{HP} qui peut atteindre son maximum K_{HPmax}, avec l'autre gain de statisme K_{BP} inférieur à son maximum K_{BPmax}. Le gain de statisme K_{BP} vaut alors K_{BP} = (1-S)/S · K_{HPmax}. Sur l'exemple des figures 7 et 8, c'est le gain de statisme K_{BP} qui peut atteindre son maximum K_{BPmax}, avec l'autre gain de statisme K_{HP} inférieur à son maximum K_{HPmax}. Le gain de statisme K_{HP} vaut alors K_{HP} = S/(1-S) · K_{BPmax}.

Ainsi, chacun des modules 122_{BP}, 122_{HP} comporte en outre un bloc 306 conçu pour déterminer si le gain de statisme K_{BP}, K_{HP} à fournir doit être pris à son maximum ou non. Par exemple, le bloc 306 de chaque module 122_{BP}, 122_{HP} est conçu pour déterminer si le gain de statisme K_{BP}, K_{HP} à fournir est inférieur à son maximum K_{BPmax}, K_{HPmax}, en supposant l'autre gain de statisme à son maximum. Ainsi, le bloc 306 du module 122_{BP} vérifie par exemple si (1-S)/S · K_{HPmax} est inférieur à K_{BPmax}, tandis que le bloc 306 du module 122_{HP} vérifie par exemple si S/(1-S) · K_{BPmax} est inférieur à K_{HPmax}. Alternativement, d'autres inégalités équivalentes pourraient être utilisées.

Si le bloc 306 détermine que le gain de statisme K_{BP}, K_{HP} à fournir doit être pris à son maximum, chaque module 122_{BP}, 122_{HP} est conçu pour fournir le gain de statisme K_{BP}, K_{HP} à son maximum K_{BPmax}, K_{HPmax}.

Sinon, chaque module 122_{BP}, 122_{HP} est conçu pour calculer le gain de statisme K_{BP}, K_{HP} à fournir à partir du ratio S et de l'autre gain de statisme K_{BP}, K_{HP}, pris à son maximum K_{BPmax}, K_{HPmax}.

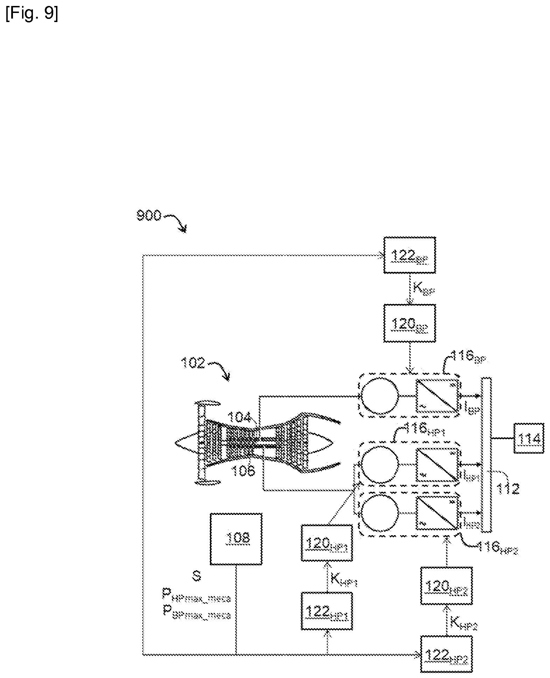

En référence à la figure 9, un autre exemple d'installation 900 de fourniture d'énergie dans un aéronef, va à présent être décrit.

L'installation 900 est similaire à l'installation 100 de la figure 1, si ce n'est qu'elle comporte plusieurs sources électriques haute pression au lieu d'une seule, deux dans l'exemple décrit, désignées par les références 116_{HP1}, 116_{HP2}. Globalement, ces deux sources électriques haute pression 116_{HP1}, 116_{HP2} se comportent comme l'unique source électrique haute pression 116_{HP} de la figure 1.

L'installation 900 comporte ainsi, pour chaque source électrique haute pression 116_{HP1}, 116_{HP2}, un module de commande 120_{HP1}, 120_{HP2} et un module 122_{HP1}, 122_{HP2} de calcul du gain de statisme K_{HP1}, K_{HP2} respectif.

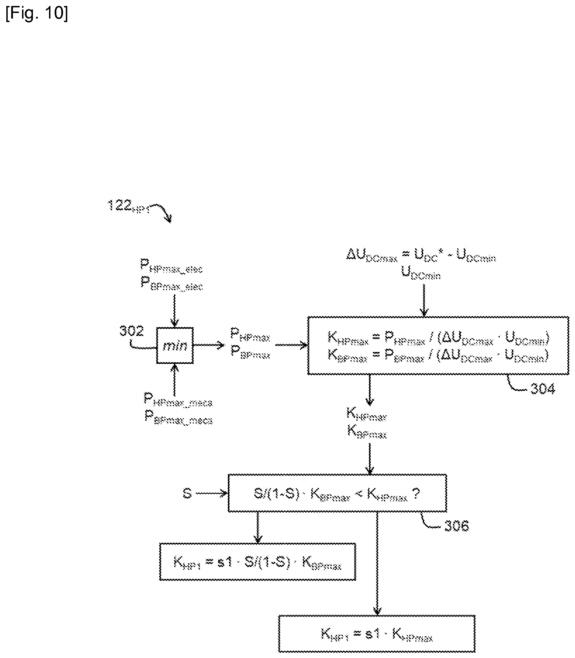

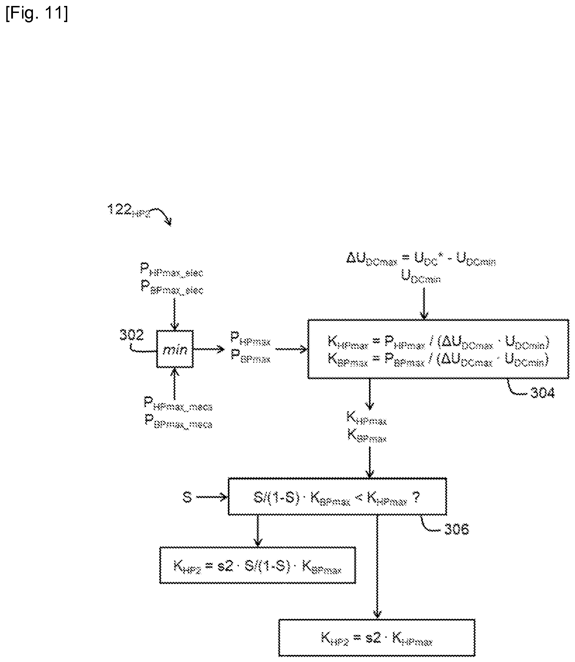

Dans ce cas, en référence à la figure 10 et à la figure 11, chaque module 122_{HP1}, 122_{HP2} utilise par exemple un ratio secondaire s1, s2 respectif. Chaque ratio secondaire s1, s2 représente la portion du courant I_{HP1}, I_{HP2} fourni par la source électrique haute pression 122_{HP1}, 122_{HP2} considérée par rapport à la somme des courants I_{HP1}, I_{HP2} fournis par l'ensemble des sources électriques haute pression 116_{HP1}, 116_{HP2}. Ainsi, la somme des ratios secondaires s1, s2 vaut un. Ces ratios secondaires s1, s2 sont par exemple fixes.

Ainsi, chaque module 122_{HP1}, 122_{HP2} est par exemple identique au module 122_{HP}, si ce n'est qu'il est tenu compte du ratio secondaire s1, s2 pour calculer le gain de statisme K_{HP1}, K_{HP2} à fournir.

Dans l'exemple illustré, les blocs 306 sont conçus pour tester une égalité utilisant un gain total haute pression K_{HP} = K_{HP1} + K_{HP2}, de la même manière que sur la figure 4. Alternativement, d'autres inégalités équivalentes pourraient être utilisées, par exemple s1 · S/(1-S) · K_{BPmax} **<** K_{HP1max} = s1 · K_{HPmax} pour le bloc 306 du module 122_{HP1} et s2 · S/(1-S) · K_{BPmax} < K_{HP1max} = s2 · K_{HPmax} pour le bloc 306 du module 122_{HP2}.

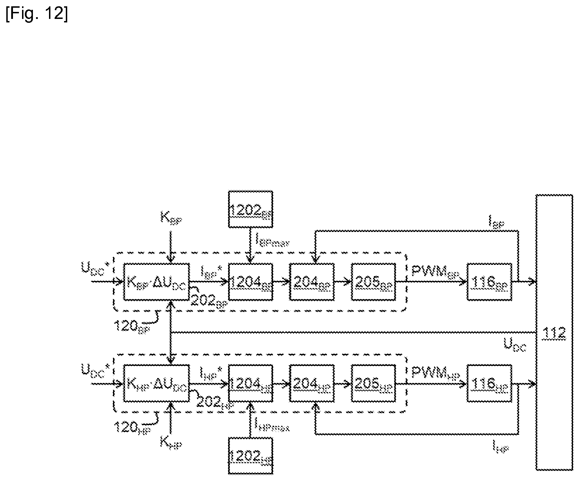

En référence à la figure 12, un autre exemple d'implémentation des modules de commande 120_{BP}, 120 _{HP}, va à présent être décrit.

Les modules de commande 120_{BP}, 120_{HP} sont identiques à ceux de la figure 2, si ce n'est qu'ils comportent en outre chacun un module 1202_{BP}, 1202_{HP} de calcul d'un courant maximal I_{BPmax}, I_{HPmax} et un module 1204_{BP}, 1204_{HP} de limitation du courant de référence I_{BP}*, I_{HP}* à ce courant maximal I_{BPmax}, I_{HPmax}. Ainsi, tant que chaque courant de référence I_{BP}*, I_{HP}* est inférieur à son courant maximal I_{BPmax}, I_{HPmax} respectif, les sources électriques 116_{BP}, 116_{HP} sont commandées selon les gains de statisme K_{BP}, K_{HP}, de manière à ce que le split S soit respecté. En revanche, si l'un les courants de référence I_{BP}*, I_{HP}* devient supérieur à son courant maximal I_{BPmax}, I_{HPmax} respectif, ce courant de référence I_{BP}*, I_{HP}* est limité, et donc également le courant I_{BP}, I_{HP} fournit au bus continu 112. L'autre courant de référence I_{BP}*, I_{HP}* peut alors continuer d'augmenter (tant qu'il n'atteint pas son courant maximal I_{BPmax}, I_{HPmax} associé). Cela permet de délivrer plus de courant au bus continu 112, au détriment du split S qui n'est alors plus respecté.

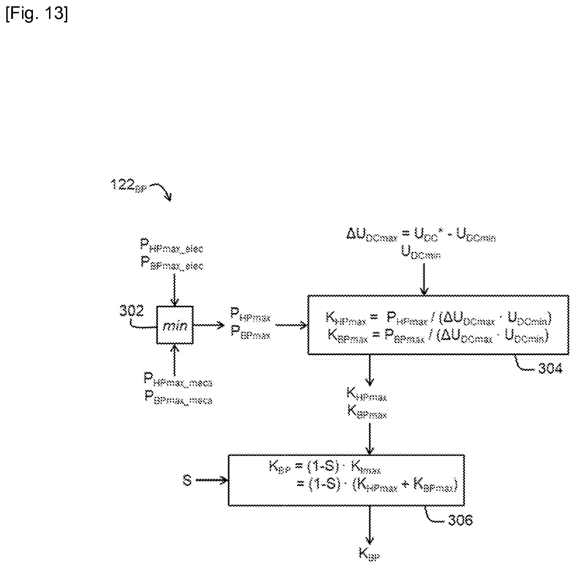

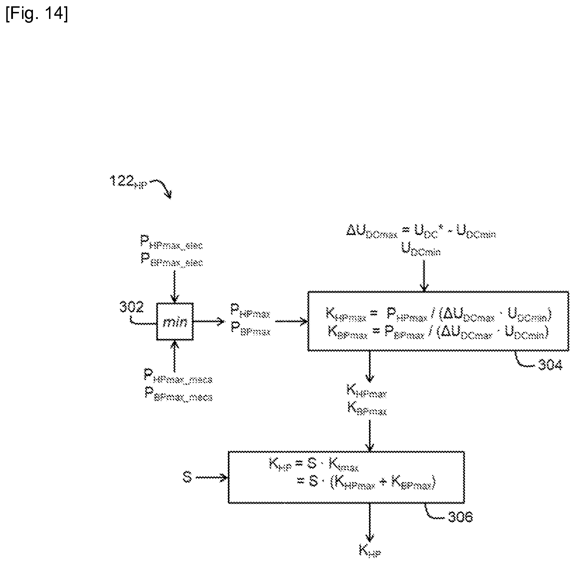

En référence à la figure 13 et à la figure 14, un autre exemple d'implémentation des modules 122_{BP}, 122_{HP} de calcul des gains de statisme K_{BP}, K_{HP} de la figure 1, pouvant en particulier être utilisé en combinaison avec les modules de commande 120_{BP}, 120_{HP} de la figure 12, va à présent être décrit.

Les modules 122_{BP}, 122_{HP} sont identiques à ceux de la figure 3 et de la figure 4, si ce n'est qu'ils comportent, à la place du bloc 306, un bloc 1302 de calcul du gain de statisme K_{BP}, K_{HP} à partir d'une constante Kₜₘₐₓ déduite des puissances maximales P_{BPmax}, P_{HPmax} et du split S.

Plus précisément, le gain de statisme K_{HP} est donné par : K_{HP} = S · Kₜₘₐₓ, tandis que le gain de statisme K_{HP} est donné par : K_{BP} = (1 - S) · Kₜₘₐₓ. (1-S) est ainsi le complémentaire à un du split S.

De préférence, la constante Kₜₘₐₓ est égale à la somme des gains de statisme maximaux K_{BPmax}, K_{HPmax} : Kₜₘₐₓ = K_{BPmax} + K_{HPmax}.

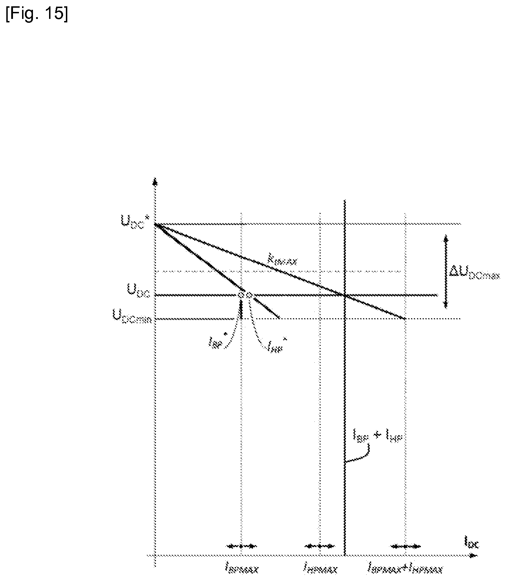

La tension de bus U_{DC} en fonction des courants I_{BP}, I_{HP} fournis au bus continu 112 est illustrée sur la figure 15, dans le cas d'un split de 50%. Comme cela est visible, le courant de référence I_{BP}* est arrivé à saturation.

En conclusion, on notera que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents couverts par les revendications dont la prévision est à la portée de l'homme de l'art en appliquant ses connaissances générales à la mise en œuvre de l'enseignement qui vient de lui être divulgué.

## Revendications

1. Installation (100 ; 900) de fourniture d'énergie dans un aéronef, comportant :
- un bus continu (112) auquel au moins une charge électrique (114) est destinée à être connectée ;
- plusieurs sources électriques (116_{BP}, 116_{HP} 116_{BP}, 116_{HP1}, 116_{HP2}) incluant :
• au moins une source électrique dite basse pression (116_{BP}) conçue pour prélever de la puissance d'un corps basse pression (104) d'une turbomachine (102) de l'aéronef, afin de fournir un courant (I_{BP}) au bus continu (112), et
• au moins une source électrique dite haute pression (116_{HP} ; 116_{HP1}, 116_{HP2}) conçue pour prélever de la puissance d'un corps haute pression (106) de la turbomachine (102) de l'aéronef, afin de fournir un courant (I_{HP} ; I_{HP1}, I_{HP2}) au bus continu (112) ;
**caractérisée en ce qu'**elle comporte en outre :
- un système (108, 122_{BP}, 122_{HP} ; 108, 122_{BP}, 122_{HP1}, 122_{HP2}) de calcul d'un gain de statisme (K_{BP}, K_{HP} ; K_{BP}, K_{HP1}, K_{HP2}) pour chaque source électrique basse pression (116_{BP}) et chaque source électrique haute pression (116_{HP} ; 122_{HP1}, 122_{HP2}), à partir d'au moins une caractéristique de fonctionnement de la turbomachine (102) ; et
- pour chaque source électrique basse pression (116_{BP}) et chaque source électrique haute pression (116_{HP} ; 122_{HP1}, 122_{HP2}), un module (120_{BP}, 120_{HP} ; 120_{BP}, 120_{HP1}, 120_{HP2}) de commande de la source électrique (116_{BP}, 116_{HP} ; 116_{BP}, 116_{HP1}, 116_{HP2}) considérée, conçu pour mettre en œuvre une régulation de statisme à partir du gain de statisme (K_{BP}, K_{HP} ; K_{BP}, K_{HP1}, K_{HP2}) calculé pour la source électrique (116BP, 116_{HP} ; 116_{BP}, 116_{HP1}, 116_{HP2}) considérée.

2. Installation (100) selon la revendication 1, dans laquelle la au moins une caractéristique de fonctionnement de la turbomachine (102) comporte au moins un parmi : un débit d'entrée de carburant et/ou un débit d'entrée d'air dans une chambre de combustion de la turbomachine (102), une vitesse de rotation du corps basse pression (104), une vitesse de rotation du corps haute pression (106), une température d'entrée d'air et/ou d'entrée de carburant et/ou de gaz d'échappement sortant de la chambre de combustion.

3. Installation (100 ; 900) selon la revendication 1 ou 2, dans laquelle le système (108, 122_{BP}, 122_{HP} ; 108, 122_{BP}, 122_{HP1}, 122_{HP2}) de calcul des gains de statisme (K_{BP}, K_{HP} ; K_{BP}, K_{HP1}, K_{HP2}) comporte :
- un contrôleur (108) de la turbomachine (102) conçu pour définir un ratio (S) entre le prélèvement de puissance du corps haute pression (106) par la ou les sources électriques haute pression (116_{HP}) et le prélèvement de puissance du corps basse pression (104) par la ou les sources électriques basse pression (116_{BP}), à partir de la ou des caractéristiques de fonctionnement de la turbomachine (102) ; et
- pour chaque source électrique (116_{BP}, 116_{HP} ; 116_{BP}, 116_{HP1}, 116_{HP2}), un module (122_{BP}, 122_{HP} ; 122_{BP}, 122_{HP1}, 122_{HP2}) de calcul, à partir du ratio (S), du gain de statisme (K_{BP}, K_{HP} ; K_{BP}, K_{HP1}, K_{HP2}) de la source électrique (116_{BP}, 116_{HP} ; 116_{BP}, 116_{HP1}, 116_{HP2}) considérée, afin que le ratio (S) soit respecté.

4. Installation (100 ; 900) selon la revendication 3, dans laquelle le contrôleur (108) est conçu pour fournir des données dite de puissance représentatives d'une puissance mécanique maximale basse pression (P_{BPmax_meca}) pouvant être prélevée sur le corps basse pression (104) et d'une puissance mécanique maximale haute pression (P_{HPmax_meca}) pouvant être prélevée sur le corps haute pression (106), et dans laquelle chaque module de calcul (122_{BP}, 122_{HP}) est conçu pour calculer le gain de statisme (K_{BP}, K_{HP}) associé à partir des données de puissance, afin que la puissance mécanique prélevée du corps basse pression (104) reste inférieure ou égale à la puissance mécanique maximale basse pression (P_{BPmax_meca}) et que la puissance mécanique prélevée du corps haute pression (104) reste inférieure ou égale à la puissance mécanique maximale haute pression (P_{HPmax_meca}).

5. Installation (100 ; 900) selon la revendication 4, dans laquelle chaque module de calcul (122_{BP}, 122_{HP}) est conçu pour calculer le gain de statisme (K_{BP}, K_{HP}) associé de manière à maximiser une somme des courants (I_{BPmax}, I_{HPmax}) pouvant être respectivement fournis par les sources électriques (116_{BP}, 116_{HP}), lorsque le bus continu (112) présente une tension de bus minimale (U_{DCmin}) prédéfinie par la régulation de statisme.

6. Installation (900) selon l'une quelconque des revendications 1 à 5, comportant plusieurs sources électriques haute pression (116_{HP1}, 116_{HP2}) et/ou plusieurs sources électriques basse pression, et dans laquelle le module de calcul (122_{HP1}, 122_{HP2}) de chaque source électrique haute pression (116_{HP1}, 116_{HP2}), respectivement basse pression, est conçu pour calculer le gain de statisme (K_{HP1}, K_{HP2}) associé à partir d'un ratio (s1, s2) entre, d'une part, le courant (I_{HP1}, I_{HP2}) fourni par la source haute pression (116_{HP1}, 116_{HP2}), respectivement basse pression, considérée et, d'autre part, une somme des courants (I_{HP1}, I_{HP2}) respectivement fournis par toutes les sources électriques haute pression (116_{HP1}, 116_{HP2}), respectivement basse pression.

7. Installation (100 ; 900) selon la revendication 4, dans laquelle chaque module de calcul (122_{BP}, 122_{HP}) est conçu pour calculer le gain de statisme (K_{HP}) de la source électrique haute pression (116_{HP}) comme le produit du ratio (S) par une constante et le gain de statisme (K_{BP}) de la source électrique basse pression (116_{BP}) comme le produit du complémentaire à un du ratio (S) par la constante.

8. Installation (100 ; 900) selon l'une quelconque des revendications 1 à 7, dans laquelle chaque module de commande (120_{BP}, 120_{HP}) est conçu pour :
- calculer un courant de référence (I_{BP}*, I_{HP}*) à partir du gain de statisme (K_{BP}, K_{HP}) associé ;
- calculer, à partir des données de puissance, un courant maximal (I_{BPmax}, I_{HPmax}) pouvant être fourni par la source électrique (116_{BP}, 116_{HP}) associée ; et
- limiter le courant de référence (I_{BP}*, I_{HP}*) au courant maximal (I_{BPmax}, I_{HPmax}).

9. Aéronef comportant une installation selon l'une quelconque des revendications 1 à 8.

10. Procédé de fourniture d'énergie dans un aéronef, **caractérisé en ce qu'**il comporte :
- le calcul, à partir d'au moins une mesure d'au moins une caractéristique de fonctionnement d'une turbomachine (102), d'un gain de statisme (K_{BP}, K_{HP}) pour :
• chaque source électrique dite basse pression (116_{BP}) conçue pour prélever de la puissance d'un corps basse pression (104) de la turbomachine (102) de l'aéronef, afin de fournir un courant (I_{BP}) à un bus continu (112) auquel au moins une charge électrique (114) est destinée à être connectée, et
• chaque source électrique dite haute pression (116_{HP}) conçue pour prélever de la puissance d'un corps haute pression (106) de la turbomachine (102) de l'aéronef, afin de fournir un courant (I_{HP}) au bus continu (112) ; et
- pour chaque source électrique basse pression (116_{BP}) et chaque source électrique haute pression (116_{HP}), la mise en œuvre d'une régulation de statisme à partir du gain de statisme (K_{BP}, K_{HP}) calculé pour la source électrique (116_{BP}, 116_{HP}) considérée.

## Patentansprüche

1. Anlage (100; 900) zur Energiezufuhr in einem Flugzeug, umfassend:
- einen Gleichstrombus (112), mit dem mindestens eine elektrische Ladung (114) verbunden werden soll;
- mehrere Stromquellen (116_{BP}, 116_{HP}; 116_{BP}, 116_{HP1}, 116_{HP2}), die Folgendes einschließen:
- mindestens eine als Niederdruck (116_{BP}) bezeichnete Stromquelle, die ausgebildet ist, um Leistung aus einem Niederdruckkörper (104) eines Turbotriebwerks (102) des Flugzeugs zu entnehmen, um den Gleichstrombus (112) mit einem Strom (I_{BP}) zu versorgen, und
- mindestens eine als Hochdruck (116_{BP}; 116_{HP1};116_{HP2}) bezeichnete Stromquelle, die ausgebildet ist, um Leistung aus einem Hochdruckkörper (106) des Turbotriebwerks (102) des Flugzeugs zu entnehmen, um den Gleichstrombus (112) mit einem Strom (I_{HP} ; I_{HP1}, I_{HP2}) zu versorgen;
**dadurch gekennzeichnet, dass** sie weiter umfasst:
- ein System (108, 122_{BP}, 122_{HP}; 108, 122_{BP}, 122_{HP1}, 122_{HP2}) zur Berechnung einer Statikverstärkung (K_{BP}, K_{HP}; K_{BP}, K_{HP1}, K_{HP2}) für jede Niederdruck-Stromquelle (116_{BP}) und jede Hochdruck-Stromquelle (116_{HP} ; 122_{HP1}, 122_{HP2}) ausgehend von mindestens einem Betriebsmerkmal des Turbotriebwerks (102); und
- für jede Niederdruck-Stromquelle (116_{BP}) und jede Hochdruck-Stromquelle (116_{HP} ; 122_{HP1}, 122_{HP2}), ein Modul (120_{BP}, 120_{HP}; 120_{BP}, 120_{HP1}, 120_{HP2}) zur Steuerung der jeweiligen Stromquelle (116_{BP}, 116_{HP}; 116_{BP}, 116_{HP1}, 116_{HP2}), das ausgebildet ist, um eine Statikregulierung ausgehend von der Statikverstärkung (K_{BP}, K_{HP}; K_{BP}, K_{HP1}, K_{HP2}) durchzuführen, die für die jeweilige Stromquelle (116_{BP}, 116_{HP}; 116_{BP}, 116_{HP1}, 116_{HP2}) berechnet wurde.

2. Anlage (100) nach Anspruch 1, wobei das mindestens eine Betriebsmerkmal des Turbotriebwerks (102) mindestens eines umfasst aus: einem Treibstoffeintrittsdurchsatz und/oder einem Lufteintrittsdurchsatz in eine Brennkammer des Turbotriebwerks (102), einer Drehgeschwindigkeit des Niederdruckkörpers (104), einer Drehgeschwindigkeit des Hochdruckkörpers (106), einer Lufteintritts - und/oder Treibstoffeintritts- und/oder Abgastemperatur, das aus der Brennkammer austritt.

3. Anlage (100; 900) nach Anspruch 1 oder 2, wobei das System (108, 122_{BP}, 122_{HP}; 108, 122_{BP}, 122_{HP1}, 122_{HP2}) zur Berechnung der Statikverstärkungen (K_{BP}, K_{HP}; K_{BP}, K_{HP1}, K_{HP2}) umfasst:
- eine Steuereinheit (108) des Turbotriebwerks (102), die dazu ausgebildet ist, ein Verhältnis (S) zwischen der Leistungsentnahme aus dem Hochdruckkörper (106) durch die Hochdruck-Stromquelle(n) (116_{HP}) und der Leistungsentnahme aus dem Niederdruckkörper (104) durch die Niederdruck-Stromquelle(n) (116_{BP}) ausgehend von dem oder den Betriebsmerkmalen des Turbotriebwerks (102) zu definieren; und
- für jede Stromquelle (116_{BP}, 116_{HP}; 116_{BP}, 116_{HP1}, 116_{HP2}), ein Modul (122_{BP}, 122_{HP}; 122_{BP}, 122_{HP1}, 122_{HP2}) zur Berechnung, ausgehend von dem Verhältnis (S), der Statikverstärkung (K_{BP}, K_{HP}; K_{BP}, K_{HP1}, K_{HP2}) der jeweiligen Stromquelle (116_{BP}, 116_{HP}; 116_{BP}, 116_{HP1}, 116_{HP2}), derart, dass das Verhältnis (S) erfüllt wird.

4. Anlage (100; 900) nach Anspruch 3, wobei die Steuereinheit (108) ausgebildet ist, um als Leistungsdaten bezeichnete Daten bereitzustellen, die repräsentativ sind für eine maximale mechanische Niederdruckleistung (P_{BPmax_meca}), die aus dem Niederdruckkörper (104) entnommen werden kann, und für eine maximale mechanische Hochdruckleistung (P_{HPmax_meca}), die aus dem Hochdruckkörper (106) entnommen werden kann, und wobei jedes Berechnungsmodul (122_{BP}, 122_{HP}) ausgebildet ist, um die zugehörige Statikverstärkung (K_{BP}, K_{HP}) ausgehend von den Leistungsdaten derart zu berechnen, dass die aus dem Niederdruckkörper entnommene mechanische Leistung (104) kleiner oder gleich der maximalen mechanischen Niederdruckleistung (P_{BPmax_meca}) bleibt und dass die aus dem Hochdruckkörper (104) entnommene mechanische Leistung kleiner oder gleich der maximalen mechanischen Hochdruckleistung (P_{HPmax_meca}) bleibt.

5. Anlage (100; 900) nach Anspruch 4, wobei jedes Berechnungsmodul (122_{BP}, 122_{HP}) ausgebildet ist, um die zugehörige Statikverstärkung (K_{BP}, K_{HP}) so zu berechnen, dass eine Summe aus den Strömen (I_{BPmax}, I_{HPmax}), die jeweils von den Stromquellen (116_{BP}, 116_{HP}) geliefert werden können, wenn der Gleichspannungsbus (112) eine durch die Statikregulierung vorgegebene minimale Busspannung (U_{DCmin}) aufweist, maximiert wird.

6. Anlage (900) nach einem der Ansprüche 1 bis 5, umfassend mehrere Hochdruck-Stromquellen (116_{HP1}, 116_{HP2}) und/oder mehrere Niederdruck-Stromquellen und wobei das Berechnungsmodul (122_{HP1}, 122_{HP2}) jeder Hochdruck-Stromquelle (116_{HP1}, 116_{HP2}) bzw. Niederdruck-Stromquelle ausgebildet ist, um die zugehörige Statikverstärkung (K_{HP1}, K_{HP2}) ausgehend von einem Verhältnis (s1, s2) zwischen einerseits dem von der jeweiligen Hochdruck-Stromquelle (116_{HP1}, 116_{HP2}) bzw. Niederdruck-Stromquelle gelieferten Strom (I_{HP1}, I_{HP2}) und andererseits einer Summe der von allen Hochdruck-Stromquellen (116_{HP1}, 116_{HP2}) bzw. Niederdruck-Stromquellen gelieferten Strömen (I_{HP1}, I_{HP2}) zu berechnen.

7. Anlage (100; 900) nach Anspruch 4, wobei jedes Berechnungsmodul (122_{BP}, 122_{HP}) ausgebildet ist, um die Statikverstärkung (K_{HP}) der Hochdruck-Stromquelle (116_{HP}) als das Produkt des Verhältnisses (S) mit einer Konstante und die Statikverstäkung (K_{BP}) der Niederdruck-Stromquelle (116_{BP}) als das Produkt des Komplementären zu eins des Verhältnisses (S) mit der Konstante zu berechnen.

8. Anlage (100; 900) nach einem der Ansprüche 1 bis 7, wobei jedes Steuerungsmodul (120_{BP}, 120_{HP}) ausgebildet ist zum:
- Berechnen eines Referenzstroms (I_{BP}*, I_{HP}*) ausgehend von der zugehörigen Statikverstärkung (K_{BP}, K_{HP});
- Berechnen, ausgehend von den Leistungsdaten, eines maximalen Stroms (I_{BPmax}, I_{HPmax}), der von der zugehörigen Stromquelle (116_{BP}, 116_{HP}) geliefert werden kann; und
- Begrenzen des Referenzstroms (I_{BP}*, I_{HP}*) auf den maximalen Strom (I_{BPmax}, I_{HPmax}).

9. Flugzeug, umfassend eine Anlage nach einem der Ansprüche 1 bis 8.

10. Verfahren zur Energiezufuhr in einem Flugzeug, **dadurch gekennzeichnet, dass** es Folgendes umfasst:
- die Berechnung, ausgehend von mindestens einer Messung mindestens eines Betriebsmerkmals eines Turbotriebwerks (102), einer Statikverstärkung (K_{BP}, K_{HP}) für:
- jede als Niederdruck (116_{BP}) bezeichnete Stromquelle, die ausgebildet ist, um Leistung aus einem Niederdruckkörper (104) des Turbotriebwerks (102) des Flugzeugs zu entnehmen, um einen Gleichstrombus (112), mit dem mindestens eine elektrische Ladung (114) verbunden werden soll, mit einem Strom (I_{BP}) zu versorgen, und
- jede als Hochdruck (116_{BP}) bezeichnete Stromquelle, die ausgebildet ist, um Leistung aus einem Hochdruckkörper (106) des Turbotriebwerks (102) des Flugzeugs zu entnehmen, um den Gleichstrombus (112) mit einem Strom (I_{HP}) zu versorgen; und
- für jede Niederdruck-Stromquelle (116_{BP}) und jede Hochdruck-Stromquelle (116_{HP}), die Durchführung einer Statikregulierung ausgehend von der Statikverstärkung (K_{BP}, K_{HP}), die für die jeweilige Stromquelle (116_{BP}, 116_{HP}) berechnet wurde.

## Claims

1. An apparatus (100; 900) for providing energy in an aircraft, comprising:
- a DC bus (112) to which at least one electrical load (114) is intended to be connected;
- several electrical sources (116_{BP}, 116_{HP}; 116_{BP}, 116_{HP1}, 116_{HP2}) including:
∘ at least one electrical source referred to as low-pressure electrical source (116_{BP}) designed to draw power from a low-pressure body (104) of a turbomachine (102) of the aircraft, in order to provide a current (I_{BP}) to the DC bus (112), and
∘ at least one electrical source referred to as high-pressure electrical source (116_{HP} ; 116_{HP1}, 116_{HP2}) designed to draw power from a high-pressure body (106) of the turbomachine (102) of the aircraft, in order to provide a current (I_{HP} ; I_{HP1}, I_{HP2}) to the DC bus (112);
**characterised in that** it further comprises:
- a system (108, 122_{BP}, 122_{HP}; 108, 122_{BP}, 122_{HP1}, 122_{HP2}) for calculating a droop gain (K_{BP}, K_{HP;} K_{BP}, K_{HP1}, K_{HP2}) for each low-pressure electrical source (116_{BP}) and each high-pressure electrical source (116_{HP} ; 122_{HP1}, 122_{HP2}), on the basis of at least one operating characteristic of the turbomachine (102); and
- for each low-pressure electrical source (116_{BP}) and each high-pressure electrical source (116_{HP} ; 122_{HP1}, 122_{HP2}), a module (120_{BP}, 120_{HP;} 120_{BP}, 120_{HP1}, 120_{HP2}) for controlling the electrical source (116_{BP}, 116_{HP;} 116_{BP}, 116_{HP1}, 116_{HP2}) under consideration, designed to implement a droop regulation on the basis of the droop gain (K_{BP}, K_{HP}; K_{BP}, K_{HP1}, K_{HP2}) calculated for the electrical source (116_{BP}, 116_{HP}; 116_{BP}, 116_{HP1}, 116_{HP2}) under consideration.

2. The apparatus (100) according to claim 1, wherein the at least one operating characteristic of the turbomachine (102) comprises at least one of: a fuel inlet flow rate and/or an air inlet flow rate into a combustion chamber of the turbomachine (102), a rotational speed of the low-pressure body (104), a rotational speed of the high-pressure body (106), an air inlet temperature and/or fuel inlet temperature and/or temperature of exhaust gases leaving the combustion chamber.

3. The apparatus (100; 900) according to claim 1 or 2, wherein the system (108, 122_{BP}, 122_{HP}; 108, 122_{BP}, 122_{HP1}, 122_{HP2}) for calculating droop gains (K_{BP}, K_{HP;} K_{BP}, K_{HP1}, K_{HP2}) comprises:
- a controller (108) of the turbomachine (102) designed to define a ratio (S) between the power drawn from the high-pressure body (106) by the high-pressure electrical source or sources (116_{HP}) and the power drawn from the low-pressure body (104) by the low-pressure electrical source or sources (116_{BP}), on the basis of the operating characteristic or characteristics of the turbomachine (102); and
- for each electrical source (116_{BP}, 116_{HP}; 116_{BP}, 116_{HP1}, 116_{HP2}), a module (122_{BP}, 122_{HP}; 122_{BP}, 122_{HP1}, 122_{HP2}) for calculating, from the ratio (S), the droop gain (K_{BP}, K_{HP;} K_{BP}, K_{HP1}, K_{HP2}) of the electrical source (116_{BP}, 116_{HP;} 116_{BP}, 116_{HP1}, 116_{HP2}) under consideration, so that the ratio (S) is complied with.

4. The apparatus (100; 900) according to claim 3, wherein the controller (108) is designed to provide data referred to as power data representative of a maximum low-pressure mechanical power (P_{BPmax_meca}) that can be drawn from the low-pressure body (104) and a maximum high-pressure mechanical power (P_{HPmax_meca}) that can be drawn from the high-pressure body (106), and wherein each calculation module (122_{BP}, 122_{HP}) is designed to calculate the associated droop gain (K_{BP}, K_{HP}) from the power data, so that the mechanical power drawn from the low-pressure body (104) remains less than or equal to the maximum low-pressure mechanical power (P_{BPmax_meca}) and the mechanical power drawn from the high-pressure body (104) remains less than or equal to the maximum high-pressure mechanical power (P_{HPmax_meca}).

5. The apparatus (100; 900) according to claim 4, wherein each calculation module (122_{BP}, 122_{HP}) is designed to calculate the associated droop gain (K_{BP}, K_{HP}) so as to maximise a sum of the currents (I_{BPmax}, I_{HPmax}) which can respectively be provided by the electrical sources (116_{BP}, 116_{HP}), when the DC bus (112) has a minimum bus voltage (U_{DCmin}) predefined by the droop regulation.

6. The apparatus (900) according to any one of claims 1 to 5, comprising a plurality of high-pressure electrical sources (116_{HP1}, 116_{HP2}) and/or a plurality of low-pressure electrical sources, and wherein the calculation module (122_{HP1}, 122_{HP2}) of each high-pressure electrical source (116_{HP1}, 116_{HP2}), respectively low-pressure electrical source, is designed to calculate the associated droop gain (K_{HP1}, K_{HP2}) on the basis of a ratio (s1, s2) between, on the one hand, the current (I_{HP1}, I_{HP2}) provided by the high-pressure source (116_{HP1}, 116_{HP2}), respectively low-pressure source, under consideration and, on the other hand, a sum of the currents (I_{HP1}, I_{HP2}) respectively provided by all the high-pressure electrical sources (116_{HP1}, 116_{HP2}), respectively low-pressure electrical sources.

7. The apparatus (100; 900) according to claim 4, wherein each calculation module (122_{BP}, 122_{HP}) is designed to calculate the droop gain (K_{HP}) of the high-pressure electrical source (116_{HP}) as the product of the ratio (S) and a constant and the droop gain (K_{BP}) of the low-pressure electrical source (116_{BP}) as the product of the one's complement of the ratio (S) and the constant.

8. The apparatus (100; 900) according to any one of claims 1 to 7, wherein each control module (120_{BP}, 120_{HP}) is designed to:
- calculate a reference current (I_{BP}*, I_{HP}*) from the associated droop gain (K_{BP}, K_{HP});
- calculate, from the power data, a maximum current (I_{BPmax}, I_{HPmax}) that can be provided by the associated electrical source (116_{BP}, 116_{HP}); and
- limit the reference current (I_{BP}*, I_{HP}*) to the maximum current (I_{BPmax}, I_{HPmax}).

9. An aircraft comprising an apparatus according to any one of claims 1 to 8.

10. A method for providing energy in an aircraft, **characterised in that** it comprises:
- calculating, from at least one measurement of at least one operating characteristic of a turbomachine (102), a droop gain (K_{BP}, K_{HP}) for:
∘ each electrical source referred to as low-pressure electrical source (116_{BP}) designed to draw power from a low-pressure body (104) of the turbomachine (102) of the aircraft, in order to provide a current (I_{BP}) to a DC bus (112) to which at least one electrical load (114) is intended to be connected, and
∘ each electrical source referred to as high-pressure electrical source (116_{HP}) designed to draw power from a high-pressure body (106) of the turbomachine (102) of the aircraft, in order to provide a current (I_{HP}) to the DC bus (112); and
- for each low-pressure electrical source (116_{BP}) and each high-pressure electrical source (116_{HP}), a droop regulation is implemented on the basis of the droop gain (K_{BP}, K_{HP}) calculated for the electrical source (116_{BP}, 116_{HP}) under consideration.
